# EUROPÄISCHE PATENTSCHRIFT

(11) **EP 1 287 952 B1**
(45) Veröffentlichungstag und Bekanntmachung des Hinweises auf die Patenterteilung: **25.05.2005**
(21) Anmeldenummer: 02019506.1
(22) Anmeldetag: 31.08.2002
(51) Int. Cl.: B25J 19/00, B25J 15/04, H01R 39/64

(54) **Drehdurchführung endseitig eines Roboterarms**
Rotatable connection located at the end of a robot arm
Connection tournante placée au bout d'un bras de robot

(30) Priorität: 04.09.2001 DE 10143186
(43) Veröffentlichungstag der Anmeldung: 05.03.2003
(73) Patentinhaber: Stemmann-Technik GmbH, 48465 Schüttorf (DE)
(72) Erfinder: Barthelt, Klaus, 53501 Grafschaft 1 (DE)
(74) Vertreter: Bockermann, Rolf, Dipl.-Ing.

(56) Entgegenhaltungen:
- EP-A- 0 288 744
- EP-A- 1 099 520
- WO-A-95/07168
- WO-A-99/60667

## Beschreibung

Die Erfindung betrifft eine Drehdurchführung für gasförmige und/oder flüssige Medien sowie für elektrische Steuersignale und Leistungsstrom zur Eingliederung zwischen einen Roboterarm und ein Werkzeug gemäß den Merkmalen im Oberbegriff des Anspruchs 1.

Durch den Prospekt "Werkzeugsysteme" der ABB Flexible Automation AB, System Products, SE-721 75 Västeräs in der Ausgabe 6397 032-181 zählt eine Drehdurchführung zum Stand der Technik, die aus zwei Teilen besteht, und zwar einer beweglichen Welle und einem festen Gehäuse. Das Gehäuse besitzt an der Innenseite eine Anzahl von Nuten. Jede Nute ist mit einer entsprechenden Bohrung in der Welle verbunden. Dreht sich die Welle innerhalb des Gehäuses, besteht immer eine Verbindung zwischen dem Gehäuse, der Nut und der Bohrung in der Welle. Diese Lösung gestattet die Versorgung von Werkzeugen mit Luft, Kühlwasser oder anderen Medien. Leistungsstrom und Steuersignale werden über Schleifringe und Gleitkontakte in Form von Kohlen übertragen. Der Signal- und Stromübertrager ist umfangsseitig des Gehäuses angeordnet. Die die Medien und die Steuersignale sowie den Leistungsstrom an die Drehdurchführung bringenden Leitungen sind entlang des Roboterarms verlegt.

Eine derartige Drehdurchführung ist vergleichsweise schwer und erfordert für die Montage mindestens zwei Monteure, wovon einer die Drehdurchführung relativ zum Werkzeugflansch des Roboterarms lageorientieren und der andere Monteur die Befestigungsschrauben mit einem Maulschlüssel anziehen muss. Da die Drehdurchführung komplett an dem Werkzeugflansch befestigt wird, hat dies zur Folge, dass ein vergleichsweise breiter Spalt zwischen der Drehdurchführung und dem Werkzeugflansch vorhanden sein muss, über welchen die Befestigungsschrauben in entsprechende Bohrungen eingeführt und gehandhabt werden müssen.

Auf diese Weise wird der axiale Abstand eines Werkzeugs vom Werkzeugflansch beträchtlich vergrößert. Somit verlagert sich der Massenschwerpunkt weiter vom Ende des Roboterarms weg, so dass das Moment größer wird. Die Nutzlast stirnseitig der Drehdurchführung wird noch weiter verringert, da sie durch die Gestaltung der Drehdurchführung und das damit einhergehende Gewicht schon reduziert ist. Auch ist die Nutzlast durch die große Länge der Drehdurchführung eingeschränkt, weil die Medien radial über das Gehäuse zugeführt werden.

Schließlich ist es noch von Bedeutung, dass der Leistungsstrom über Schleifringe und Kohlen übertragen wird. Dadurch ist zwangsweise Abrieb der Kohlen im Innern der Drehdurchführung vorhanden, so dass in vielen Fällen Kurzschlüsse nicht zu vermeiden sind.

Die EP 1 099 520 A1 offenbart eine Drehdurchführung für gasförmige und/oder flüssige Medien sowie für elektrische Steuersignale und Leistungsstrom, welche zwischen einem mit radialen Kanälen versehenen Andockflansch und einer endseitig eines Roboterarms festlegbaren Stirnplatte in axialer Hintereinanderanordnung eine Medienzuführung sowie einen Signal- und Stromübertrager aufweist. Ein Hohlzapfen mit Axialkanälen dient sowohl der Übertragung der Medien als auch der Signal- und Leistungsströme zwischen einem den Hohlzapfen umgebenden Medienübertrager.

Auch diese Bauart einer Drehdurchführung weist prinzipiell dieselben vorstehend geschilderten Nachteile auf.

Durch die WO 99/60667 zählt es zum Stand der Technik, bei einer Drehdurchführung stirnseitig eines Roboterarms im Umfang des Signal- und Stromübertragers Schleifringe und Bürsten zu verwenden.

Der Erfindung liegt - ausgehend vom Stand der Technik - die Aufgabe zugrunde, eine Drehdurchführung für gasförmige und/oder flüssige Medien sowie für elektrische Steuersignale und Leistungsstrom zur Eingliederung zwischen einen Roboterarm und ein Werkzeug zu schaffen, die kurz und leicht baut und bei welcher eine vorgesehene Nutzlast wesentlich besser ausgeschöpft werden kann.

Die Lösung dieser Aufgabe wird in den kennzeichnenden Merkmalen des Anspruchs 1 gesehen.

Ein wesentlicher Teil des erfindungsgemäßen Gedankens ist die Anordnung eines Adapterflansches mit Axialstutzen und die gesonderte Festlegbarkeit des Adapterflansches am Werkzeugflansch des Roboterarms, unabhängig von der Drehdurchführung. Dies ermöglicht es nur einem Monteur, zunächst den Adapterflansch am Werkzeugflansch problemlos festzulegen, und zwar dadurch, dass die Befestigungsschrauben ohne Schwierigkeiten gehandhabt und mit einem Drehmomentschlüssel angezogen werden können. Die eigentliche Drehdurchführung mit dem Medienübertrager auf der einen Seite und dem Signal- und Stromübertrager auf der anderen Seite kann für sich komplett zusammengebaut und als Baueinheit über den Hohlzapfen des Medienübertragers am Axialstutzen des Adapterflansches fixiert werden. Auch dies kann von einem einzelnen Monteur durchgeführt werden.

Ein weiterer Vorteil besteht darin, dass der Signal- und Stromübertrager umfangsseitig des Medienübertragers angeordnet wird. Dadurch kann der Rotorteil des Signal- und Stromübertragers auf der dem Adapterflansch zugewandten Seite des Andockflansches und der Statorteil des Signal- und Stromübertragers auf der dem Andockflansch zugewandten Seite der Medienzuführung festgelegt werden. Auf diese Weise ergibt sich eine extrem kurze axiale Baulänge der Drehdurchführung mit dem besonderen Vorteil, dass der Massenschwerpunkt des jeweiligen Werkzeugs näher an das Ende des Roboterarms heran verlegt wird und somit die Nutzlast deutlich erhöht werden kann.

Die Bestandteil des Medienübertragers bildende Medienzuführung weist eine zentrale Buchse sowie einen Zuführflansch auf. Die Buchse ist mit mehreren parallel zueinander verlaufenden Axialkanälen versehen. Diese Axialkanäle stehen über innere Umfangsnuten in der Buchse sowie segmentartige Anschnitte mit den Axialkanälen im Hohlzapfen in Verbindung.

Die Axialkanäle in der Buchse stehen wiederum über Radialkanäle im Zuführflansch mit entsprechenden sich axial, und zwar parallel zur sechsten Achse des Roboterarms ausgerichteten Zuführanschlüssen in Verbindung. Über die Anschlüsse, die Radialkanäle im Zuführflansch, die Axialkanäle in der Buchse sowie die Axialkanäle im Hohlzapfen und die Radialkanäle im Andockflansch können die jeweiligen Medien, wie beispielsweise Luft, Kühlwasser oder Öl, zu einem am Andockflansch festgelegten Werkzeug überführt werden.

Sowohl die Buchse als auch der Zuführflansch werden vorzugsweise aus glasfaserverstärktem Kunststoff hergestellt. Dadurch kann das Gewicht der Drehdurchführung weiter gesenkt werden. Außerdem können die Radialkanäle in den Zuführflansch als Nuten eingefräst werden. Es wird dann lediglich ein Deckel aus glasfaserverstärktem Kunststoff dicht auf den Zuführflansch gelegt, um die Radialkanäle zu komplettieren.

Die axiale Anordnung der Medienanschlüsse ist mit dem Vorteil verbunden, dass sie sehr geschützt untergebracht sind. Außerdem wird durch diese Art die Gesamtlänge der Drehdurchführung vermindert.

Die Drehdurchführung kann für alle Einsatzarten identisch ausgebildet werden. Das heißt, es können der Medienübertrager sowie der Signal- und Stromübertrager gleichzeitig eingesetzt werden. Ferner können nur der Medienübertrager oder nur der Signal- und Stromübertrager genutzt werden. Auch ist es möglich, vom Signal- und Stromübertrager nur den einen oder den anderen Teil für sich alleine oder gegebenenfalls in Verbindung mit dem Medienübertrager einzusetzen. Die Variationsbreite der erfindungsgemäßen Drehdurchführung wird hierdurch wesentlich vergrößert. Die Gestaltung ist darüber hinaus gezielt auf einen Massenartikel abgestellt, den eine solche Drehdurchführung nun mal darstellt. Hier spielt die Gewichtsverminderung und die axiale Länge eine erhebliche Bedeutung zur Erreichung einer möglichst großen Nutzlast. Zu diesem Zweck kann auch noch eine entsprechende Materialverwendung hinzukommen. So ist es beispielsweise denkbar, dass der Adapterflansch aus Titan-Aluminium besteht. Auch wesentliche Teile des Medienübertragers können aus Titan-Aluminium gefertigt sein. Die Medienzuführung wird bevorzugt aus glasfaserverstärktem Kunststoff gebildet. Für den Signal- und Stromübertrager können ebenfalls glasfaserverstärkte Kunststoffe eingesetzt werden.

Durch die Gestaltung der Stirnseite des Andockflansches entsprechend dem Werkzeugflansch des Roboterarms können folglich alle Andocksysteme ohne zusätzliche Zwischenelemente eingesetzt werden.

Besonders vorteilhaft sind die Merkmale des Anspruchs 2. Demgemäß umfasst der Signal- und Stromübertrager mehrere axial zusammensteckbare Scheiben mit auf konzentrischen Kreisen aneordneten Schleifringen aus Kupfer und Bürsten, insbesondere aus Goldfederdrähten. Hiermit wird nicht nur zu einer weiteren Gewichtsreduzierung beigetragen, sondern es kann auch im Vergleich zu Kohlekontakten kein Abrieb in Innern der Drehdurchführung entstehen, so dass Funktionsbeeinträchtigungen, wie z.B. Kurzschlüsse, weitgehend eliminiert werden.

Basis ist eine Leiterscheibe für den Leistungsstrom in Verbindung mit einer Bürsten tragenden Bürstenscheibe entsprechend den auf der Leiterscheibe angeordneten Schleifringen.

Der Signal- und Stromübertrager wird ausgehend von der Leiterscheibe zur Stromübertragung mit einer oder mehreren weiteren Scheiben für die Signalübertragung zusammengesteckt. Zu diesem Zweck sind an der Leiterscheibe des Stromübertragers entsprechende Stifte vorgesehen. Auch die die Bürsten tragenden Scheiben sind ausgehend von der mit der Leiterscheibe für die Stromübertragung zusammenwirkenden Bürstenscheiben über Stifte zusammengesteckt. Die Leiterscheiben zur Signalübertragung können auf beiden Seiten Schleifringe aufweisen, so dass dann auch auf beiden Seiten Bürstenscheiben mit Bürsten vorgesehen sind.

Sowohl der Statorteil als auch der Rotorteil des Signal- und Stromübertragers sind entsprechend den Merkmalen des Anspruchs 3 in eine mit dem Andockflansch verbundene Haube integriert. Sie sind mithin geschützt untergebracht. Die Haube besteht vorzugsweise aus Kohlenstofffasern und Aramid, wobei eine Zweischichtenkonstruktion verwendet wird, die außen die Kohlenstofffasern zur Festigkeit der Haube und innen Aramid zur Gewährleistung der Zähigkeit aufweist. Der Werkstoff Aramid wird auch deshalb innen benutzt, weil er elektrisch nicht leitend ist. Die Haube ist in einem Umfangsbereich mit einem Anschluss zur Überführung des Leistungsstroms von dem Rotorteil zu einem Werkzeug versehen.

Um das Gewicht der Drehdurchführung weiter zu reduzieren, sind gemäß den Merkmalen des Anspruchs 4 in den Zuführflansch unabhängig von den Radialkanälen weitere sektorale Ausnehmungen eingefräst, ohne dass die Stabilität des Zuführflansches hierdurch beeinträchtigt wird. Diese Ausnehmungen werden ebenfalls durch den Deckel verschlossen.

Neben den Anschlüssen für die einem Werkzeug zuzuführenden Medien ist nach Anspruch 5 der Zuführflansch auch als Träger von Anschlüssen für die Signal- und Stromübertragung ausgebildet.

Die Erfindung ist nachfolgend anhand eines in den Zeichnungen veranschaulichten Ausführungsbeispiels näher erläutert. Es zeigen:
- Figur 1: einen vertikalen Querschnitt durch eine Drehdurchführung für einen Roboterarm;
- Figur 2: eine Ansicht auf die Darstellung der Figur 1 in Richtung der Pfeile II und lla quer zu den Ebenen E und E1 und
- Figur 3: eine Ansicht auf die Darstellung der Figur 1 in Richtung des Pfeils III gesehen, teilweise im Schnitt.

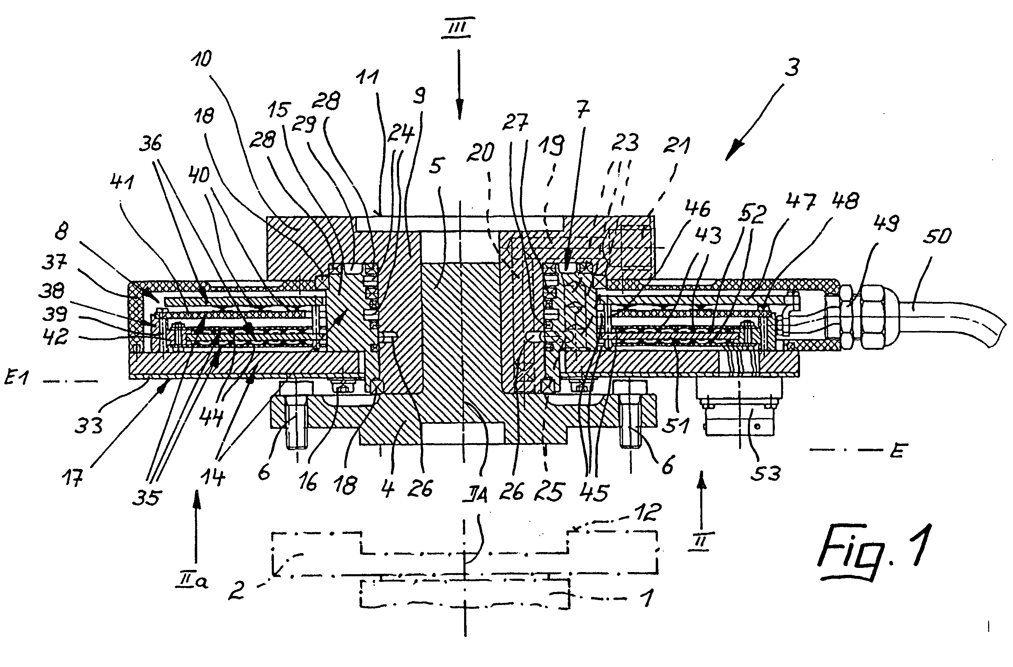

Mit 1 ist in der Figur 1 schematisch das Ende eines ansonsten nicht näher dargestellten Roboterarms bezeichnet. Stirnseitig des Roboterarms 1 befindet sich ein ebenfalls nur schematisch angedeuteter Werkzeugflansch 2.

An dem Werkzeugflansch 2 ist eine Drehdurchführung 3 für gasförmige und/oder flüssige Medien sowie für elektrische Steuersignale und Leistungsstrom festlegbar (Figuren 1 bis 3).

Zu diesem Zweck ist der Drehdurchführung 3 ein Adapterflansch 4 mit einem Axialstutzen 5 aus Titan-Aluminium zugeordnet. Der Adapterflansch 4 ist ohne die Drehdurchführung 3 mittels Schraubbolzen 6 am Werkzeugflansch 2 kraft- und formschlüssig festlegbar.

Die Drehdurchführung 3 weist einerseits einen Medienübertrager 7 und andererseits einen Signal- und Stromübertrager 8 auf.

Der Medienübertrager 7 umfasst zunächst einen Hohlzapfen 9 und einen mit dem Hohlzapfen 9 verbundenen Andockflansch 10. Diese Teile bestehen aus Titan-Aluminium. Die Stirnseite 11 des Andockflansches 10 ist konfigurativ der Stirnseite 12 des Werkzeugflansches 2 des Roboterarms 1 angepasst.

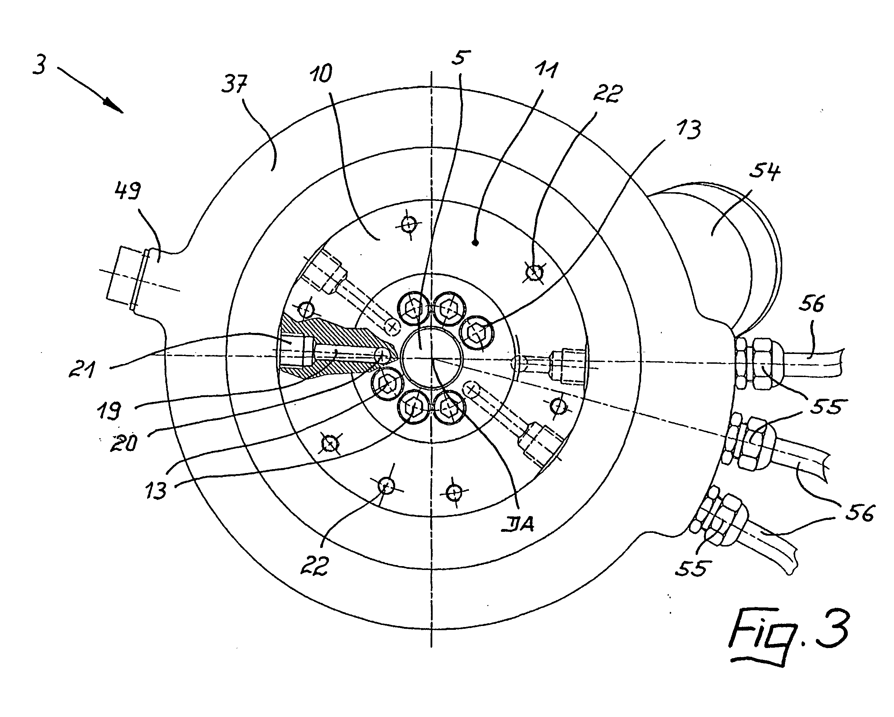

Der Hohlzapfen 9 sowie der mit diesem einteilig verbundene Andockflansch 10 des Medienübertragers 7 werden mit Hilfe von aus der Figur 3 erkennbaren Schraubbolzen 13 am Adapterflansch 4 festgelegt. Die Schraubbolzen 13 durchsetzen die Wand des Hohlzapfens 9 in Axialrichtung parallel zur Drehachse DA.

Zum Medienübertrager 7 gehört ferner eine Medienzuführung 14, die sich aus einer den Hohlzapfen 9 relativ verdrehbar umschließenden Buchse 15 und einem mit der Buchse 15 durch Schraubbolzen 16 verbundenen Zuführflansch 17 zusammensetzt. Die Buchse 15 ist durch Wälzlager 18 einerseits gegenüber dem Hohlzapfen 9 und andererseits gegenüber dem Andockflansch 10 abgestützt. Buchse 15 und Zuführflansch 17 bestehen aus glasfaserverstärktem Kunststoff.

Im Andockflansch 10 befinden sich, wie aus den Figuren 1-3 ersichtlich, vier Radialkanäle 19, die mit Axialkanälen 20 im Hohlzapfen 9 medienleitend verbunden sind. Die Medienaustritte 21 der Radialkanäle 19 sind über nicht näher veranschaulichte Leitungen mit einem ebenfalls nicht näher dargestellten Werkzeug verbunden, das am Andockflansch10 befestigt wird. Dazu besitzt der Andockflansch 10 entsprechend der Darstellung der Figur 3 mehrere Gewindebohrungen 22.

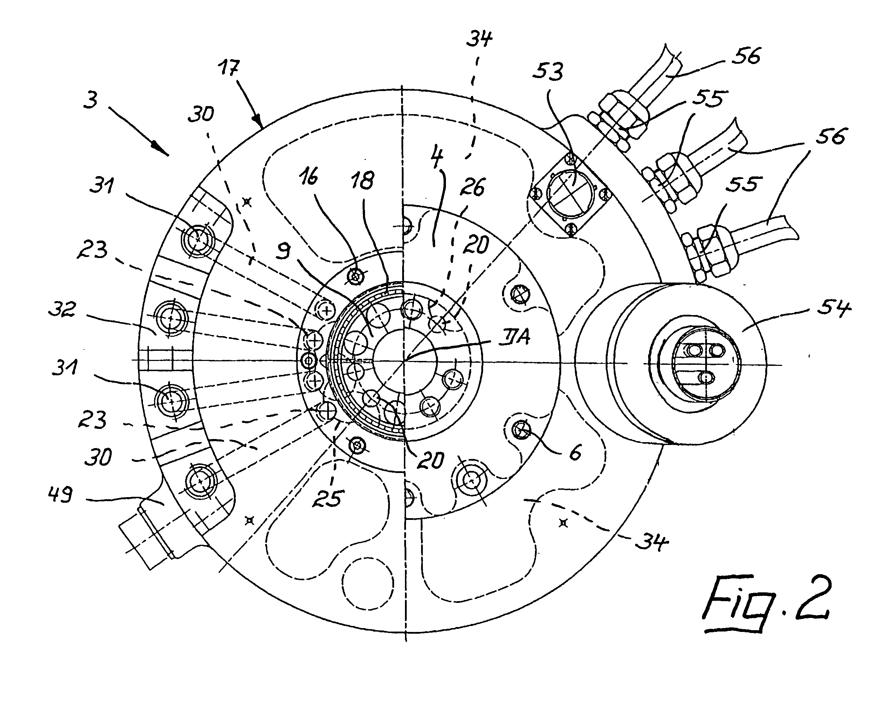

In der Buchse 15 sind vier unterschiedlich lange Axialkanäle 23 vorgesehen, die jeweils über innere Umfangsnuten 24 in der Buchse 15 sowie über segmentartige Anschnitte 25, 26 in der Buchse 15 sowie im Hohlzapfen 9 (Figuren 1 und 2) mit den Axialkanälen 20 im Hohlzapfen 9 medienleitend verbunden sind. Zwischen den Umfangsnuten 24 bzw. den Anschnitten 25, 26 befinden sich Dichtungen 27. Ferner sind Dichtungen 28 stirnseitig der Buchse 15 vorgesehen. Zwischen diesen Dichtungen 28 ist eine stirnseitige Umfangsnut 29 in die Buchse 15 eingearbeitet.

Die Axialkanäle 23 in der Buchse 15 stehen mit aus der Figur 2 erkennbaren Radialkanälen 30 im Zuführflansch 17 in medienleitender Verbindung. Die Radialkanäle 30 sind mit Anschlüssen 31 zur Medienzuführung verbunden, die sich in einer randseitigen Leiste 32 befinden, welche stirnseitig des Zuführflansches 17 angesetzt ist. Die Radialkanäle 30 im Zuführflansch 17 sind durch Fräsen hergestellt. Sie werden durch einen Deckel 33 dicht verschlossen (Figur 1).

In den Bereichen neben den Radialkanälen 30 ist, wie die Figur 2 erkennen lässt, der Zuführflansch 17 großzügig mit sektoralen Ausnehmungen 34 versehen, um das Gewicht zu verringern. Auch diese Ausnehmungen 34 sind durch den Deckel 33 verschlossen.

Der Signal- und Stromübertrager 8 mit Statorteil 35 und Rotorteil 36 ist umfangsseitig der Buchse 15 in einer Haube 37 angeordnet, die mit dem Andockflansch 10 verbunden ist. Die Haube 37 ist zweilagig aufgebaut. Die äußere Lage besteht aus Kohlenstofffasern, während die innere Lage aus Aramid gefertigt und damit elektrisch nicht leitend ist.

Der Statorteil 35 weist einen im Querschnitt T-förmigen Ring 38 auf, der über Bolzen 39 mit dem Zuführflansch 17 verbunden ist (Figur 1). Außerdem ist über die Bolzen 39 eine auf mehreren konzentrischen Ringen umfangsseitig verteilte Bürsten 40 aus Golddrahtfedem tragende Bürstenscheibe 41 zur Übertragung von Leistungsstrom verbunden. Der sich radial nach innen erstreckende Kragen 42 des Rings 38 trägt an der Ober- und Unterseite auf mehreren konzentrischen Ringen Bürsten 43 aus Golddrahtfedern tragende Bürstenscheiben 44 zur Übertragung von Signalen.

Sowohl die der Übertragung von Leistungsstrom dienende Bürstenscheibe 41 als auch die Bürstenscheiben 44 für die Signalübertragung sind in der Nähe der Buchse 15 ausgenommen. Diese Ausnehmungen 45 werden von Stiften 46 durchsetzt, die an einer Leiterscheibe 47 des Rotorteils 36 befestigt sind, welche auf der Innenseite in konzentrischer Anordnung mehrere Schleifringe 48 trägt, welche mit den Bürsten 40 an der Bürstenscheibe 41 in Kontakt stehen. Diese Leiterscheibe 47 ist innenseitig der Haube 37 festgelegt. Sie ist über einen Anschluss 49 und eine Leitung 50 mit dem nicht näher dargestellten Werkzeug stirnseitig des Andockflansches 10 verbunden.

Die im radial inneren Bereich vorgesehenen Stifte 46 dienen auch der Festlegung einer weiteren Leiterscheibe 51 mit auf beiden Seiten konzentrisch angeordneten Schleifringen 52, die mit den Bürsten 43 an den Bürstenscheiben 44 zusammenwirken. Der äußere Umfangsbereich der Leiterscheibe 51 fasst relativverdrehbar in eine Nut des Kragens 42 des T-förmigen Rings 38. Die über die Stifte 46 verbundenen und mit Schleifringen 48, 52 versehenen Leiterscheiben 47, 51 bilden mithin den Rotorteil 36 des Signal- und Stromübertragers 8.

Ferner ist den Figuren zu entnehmen, dass der Zuführflansch 17 der Medienzuführung 14 noch Träger von Anschlüssen 53, 54 für den Signal- und Stromübertrager 8 bildet.

Der Anschluss 53 dient der Signalzuführung, während der Anschluss 54 für die Stromzuführung vorgesehen ist.

Außerdem sind den Figuren 2 und 3 noch der Signalübertragung dienende Anschlüsse 55 und Leitungen 56 zu entnehmen, die zum Werkzeug führen.

### Bezugszeichenaufstellung

- 1 -: Roboterarm
- 2 -: Werkzeugflansch
- 3 -: Drehdurchführung
- 4 -: Adapterflansch
- 5 -: Axialstutzen an 4
- 6 -: Schraubbolzen
- 7 -: Medienübertrager
- 8 -: Signal- u. Stromübertrager
- 9 -: Hohlzapfen v. 7
- 10 -: Andockflansch v. 7
- 11 -: Stirnseite v. 10
- 12 -: Stirnseite v. 2
- 13 -: Schraubbolzen
- 14 -: Medienzuführung v. 7
- 15 -: Buchse v. 14
- 16 -: Schraubbolzen
- 17 -: Zuführflansch v. 14
- 18 -: Wälzlager
- 19 -: Radialkanäle in 10
- 20 -: Axialkanäle in 9
- 21 -: Medienaustritte v. 19
- 22 -: Gewindebohrungen in 10
- 23 -: Axialkanäle in 15
- 24 -: Umfangsnuten in 15
- 25 -: Anschnitte in 15
- 26 -: Anschnitte in 9
- 27 -: Dichtungen
- 28 -: Dichtungen
- 29 -: Umfangsnut in 15
- 30 -: Radialkanäle in 17
- 31 -: Anschlüsse zu 30
- 32 -: Leiste mit 31
- 33 -: Deckel an 17
- 34 -: Ausnehmungen in 17
- 35 -: Statorteil v. 8
- 36 -: Rotorteil v. 8
- 37-: Haube
- 38 -: Ring v. 35
- 39 -: Bolzen
- 40 -: Bürsten an 41
- 41 -: Bürstenscheibe v. 35
- 42 -: Kragen v. 38
- 43 -: Bürsten an 44
- 44 -: Bürstenscheiben v. 35
- 45 -: Ausnehmungen in 41, 44
- 46 -: Stifte
- 47 -: Leiterscheibe v. 36
- 48 -: Schleifringe
- 49 -: Anschluss an 47
- 50 -: Leitung an 49
- 51 -: Leiterscheibe v. 36
- 52 -: Schleifringe an 51
- 53 -: Anschluss v. 8
- 54 -: Anschluss v. 8
- 55 -: Anschlüsse
- 56 -: Leitungen

- DA-: Drehachse

## Patentansprüche

1. Drehdurchführung für gasförmige und/oder flüssige Medien sowie für elektrische Steuersignale und Leistungsstrom zur Eingliederung zwischen einen Roboterarm (1) und ein Werkzeug, die einen Medienübertrager (7) mit einem radial kanalisierten Andockflansch (10), einem axial kanalisierten Hohlzapfen (9) und einer den Hohlzapfen (9) relatiwerdrehbar, jedoch dicht umschließenden Medienzuführung (14) sowie einen Signal- und Stromübertrager (8) mit Statorteil (35) und Rotorteil (36) umfangsseitig des Hohlzapfens (9) aufweist, welcher in bezug auf den Statorteil (35) mit der Medienzuführung (14) verbunden ist, wobei die Medienzuführung (14) sowie der Statorteil (35) und der Rotorteil (36) des Signal- und Stromübertragers (8) im Längenbereich des Hohlzapfens (9) vorgesehen sind **dadurch gekennzeichnet, dass** der Hohlzapfen (9) einen Axialstutzen (5) als Bestandteil eines stirnseitig am Werkzeugflansch (2) des Roboterarms (1) festlegbaren Adapterflansches (4) übergreift und an diesem durch die Wand des Hohlzapfens (9) in Axialrichtung parallel zur Drehachse (DA) durchsetzende Schraubbolzen (13) lagefixiert ist, wobei die Medienzuführung (14) aus einer hinsichtlich des Rotorteils (36) am Andockflansch (10) befestigten, den Signal- und Stromübertrager (8) zentral durchsetzenden, den Hohlzapfen (9) übergreifenden sowie einerseits gegenüber dem Hohlzapfen (9) und andererseits gegenüber dem Andockflansch (10) durch Wälzlager (18) abgestützten Buchse (15) mit Axialkanälen (23) und diese Axialkanäle (23) mit Axialkanälen (20) in dem Hohlzapfen (9) verbindenden Umfangsnuten (24) sowie segmentartige Anschnitte (25, 26) in der Buchse (15) und im Hohlzapfen (9) und aus einem mit der Buchse (15) verbundenen, axiale Anschlüsse (31) für die Medien sowie Radialkanäle (30) aufweisenden Zuführflansch (17) zwischen dem Adapterflansch (4) und dem Signal- und Stromübertrager (8) gebildet ist, und bei welcher der Andockflansch (10) auf der dem Adapterflansch (4) abgewandten Stirnseite (11) entsprechend dem Werkzeugflansch (2) des Roboterarms (1) konfiguriert ist.

2. Drehdurchführung nach Anspruch 1, **dadurch gekennzeichnet, dass** der Signal- und Stromübertrager (8) mehrere axial zusammen steckbare Scheiben (41, 44; 47, 51 ) mit auf konzentrischen Kreisen angeordneten Bürsten (40, 43) und Schleifringen (48, 52) umfasst.

3. Drehdurchführung nach Anspruch 1 oder 2, **dadurch gekennzeichnet, dass** der Signal- und Stromübertrager (8) in eine mit dem Andockflansch (10) verbundene Haube (37) integriert ist.

4. Drehdurchführung nach einem der Ansprüche 1 bis 4, **dadurch gekennzeichnet, dass** der Zuführflansch (17) der Medienzuführung (14) mit von den Radialkanälen (30) getrennten, sich in Umfangsrichtung erstreckenden sektoralen Ausnehmungen (34) versehen ist.

5. Drehdurchführung nach einem der Ansprüche 1 bis 4, **dadurch gekennzeichnet, dass** der Zuführflansch (17) der Medienzuführung (14) einen Träger von Anschlüssen (53, 54) für den Signal- und Stromübertrager (8) bildet.

## Claims

1. A rotary leadthrough for gaseous and/or liquid media and for electric control signals and power current for incorporation between a robot arm (1) and a tool, the said leadthrough comprising a media transmitter (7) with a radially channelled docking flange (10), an axially channelled hollow pin (9) and a media supply (14) which encloses the hollow pin (9) so as to be relatively rotatable but in sealing-tight relationship, and a signal and current transmitter (8) with a stator part (35) and a rotor part (36) peripherally of the hollow pin (9), which is connected to the media supply (14) with respect to the stator part (35), the media supply (14) and the stator part (35) and the rotor part (36) of the signal and current transmitter (8) being provided in the region of the length of the hollow pin (9), **characterised in that** the hollow pin (9) engages over an axial spigot (5) as part of an adapter flange fixable at the end face on the tool flange (2) of the robot arm (1), and is positionally fixed thereon by screwbolts (13) which extend through the wall of the hollow pin (9) in the axial direction parallel to the rotational axis (DA), wherein the media supply (14) is formed from a bush (15) which with respect to the rotor part (36) is fixed on the docking flange (10) and extends centrally through the signal and current transmitter (8) and engages over the hollow pin (9) and, on the one hand, is supported with respect to the hollow pin (9) and, on the other hand, with respect to the docking flange (10) by rolling bearings (18), said bush (15) having axial channels (23) and peripheral grooves (24) connecting said axial channels (23) to axial channels (20) in the hollow pin (9), and segmental incisions (25, 26) in the bush (15) and in the hollow pin (9), and from a supply flange (17) between the adapter flange (4) and the signal and current transmitter, said supply flange (17) being connected to the bush (15) and having axial connections (31) for the media and radial channels (30), and wherein the docking flange (10) is configured to correspond to the tool flange (2) of the robot arm (1) on the end face (11) remote from the adapter flange (4).

2. A rotary leadthrough according to claim 1, **characterised in that** the signal and current transmitter (8) comprises a plurality of axially interfittable discs (41, 44; 47, 51) with slip rings (48, 52) and brushes (40, 43) disposed on concentric circles.

3. A rotary leadthrough according to claim 1 or 2, **characterised in that** the signal and current transmitter (8) is integrated in a hood (37) connected to the docking flange (10).

4. A rotary leadthrough according to any one of claims 1 to 4, **characterised in that** the supply flange (17) of the media supply (14) is provided with peripherally extending sectoral recesses (34) separated from the radial channels (30).

5. A rotary leadthrough according to any one of claims 1 to 4, **characterised in that** the supply flange (17) of the media supply (14) forms a support for connections (53, 54) for the signal and current transmitter (8).

## Revendications

1. Passage tournant pour des milieux gazeux et/ou liquides ainsi que pour des signaux de commande électriques et du courant de puissance en vue de l'intégration entre un bras de robot (1) et un outil, qui présente un transmetteur de milieux (7) avec une bride d'amarrage (10) canalisée radialement, un pivot creux (9) canalisé axialement et une alimentation en milieux (14) pouvant être déplacée rotativement par rapport au pivot creux (9) et l'entourant cependant hermétiquement, ainsi qu'un transmetteur de signaux et de courant (8) avec partie stator (35) et partie rotor (36) côté périmètre du pivot creux (9), lequel est relié à l'alimentation en milieux (14) en ce qui concerne la partie rotor (36), l'alimentation en milieux (14), ainsi que la partie stator (35) et la partie rotor (36) du transmetteur de signaux et de courant (8) étant prévus dans la zone de la longueur du pivot creux (9), **caractérisé en ce que** le pivot creux (9) chevauche un support axial (5) sous forme de constituant d'une bride adaptatrice (4) fixable sur la face de la bride d'outil (2) du bras de robot (1) et est fixé en position par des boulons filetés (13) passés à travers la paroi du pivot creux (9) en direction axiale parallèlement à l'axe de rotation (DA), l'alimentation en milieux (14) étant formée d'une douille (15) fixée à la bride d'amarrage (10) au niveau de la partie rotor (36), traversant centralement le transmetteur de signaux et de courant (8), chevauchant le pivot creux (9) et étant étayée, d'un côté, vis-à-vis du pivot creux (9) et, d'un autre côté, vis-à-vis de la bride d'amarrage (10) grâce à des paliers à roulement (18), ladite douille comportant des canaux axiaux (23) et des rainures périphériques (24) reliant ces canaux axiaux (23) avec des canaux axiaux (20) dans le pivot creux (9) ainsi que des entailles de type segment (25, 26) dans la douille (15) et dans le pivot creux (9), et d'une bride d'alimentation (17) reliée à la douille (15) et présentant des connexions axiales (31) pour les milieux ainsi que des canaux radiaux (30) entre la bride adaptatrice (4) et le transmetteur de signaux et de courant (8), et pour lequel la bride d'amarrage (10) est configurée sur la face terminale (11) de dos à la bride adaptatrice (4) en fonction de la bride d'outil (2) du bras de robot (1).

2. Passage tournant selon la revendication 1, **caractérisé en ce que** le transmetteur de signaux et de courant (8) comporte plusieurs disques (41, 44 ; 47, 51) enfichables ensemble axialement avec des balais (40, 43) et des bagues collectrices (48, 52) disposés sur des cercles concentriques.

3. Passage tournant selon la revendication 1 ou 2, **caractérisé en ce que** le transmetteur de signaux et de courant (8) est intégré dans un capot (37) relié à la bride d'amarrage (10).

4. Passage tournant selon l'une quelconque des revendications 1 à 4, **caractérisé en ce que** la bride d'alimentation (17) de l'alimentation en milieux (14) est munie d'évidements sectoriels (34) séparés des canaux radiaux (30) et s'étendant dans le sens périphérique.

5. Passage tournant selon l'une quelconque des revendications 1 à 4, **caractérisé en ce que** la bride d'alimentation (17) de l'alimentation en milieux (14) forme un support de connexions (53, 54) pour le transmetteur de signaux et de courant (8).
